# EUROPÄISCHE PATENTSCHRIFT

(11) **EP 1 828 647 B1**
(45) Veröffentlichungstag und Bekanntmachung des Hinweises auf die Patenterteilung: **30.07.2008**
(21) Anmeldenummer: 06706702.5
(22) Anmeldetag: 07.02.2006
(51) Int. Cl.: F16H 63/32, F16D 23/02

(54) **SCHALTVORRICHTUNG**
SHIFT DEVICE
SYSTEME DE CHANGEMENT DE VITESSES

(30) Priorität: 08.02.2005 DE 102005005693
(43) Veröffentlichungstag der Anmeldung: 05.09.2007
(73) Patentinhaber: FZGmbH, 85748 Garching (DE)
(72) Erfinder: HÖHN, Bernd-Robert, 81925 München (DE)
(74) Vertreter: Barske, Heiko
(86) Internationale Anmeldenummer: PCT/EP2006/001051
(87) Internationale Veröffentlichungsnummer: WO 2006/084659

(56) Entgegenhaltungen:
- EP-A- 0 758 723
- EP-A- 0 819 864
- DE-A1- 19 901 067

## Beschreibung

Die Erfindung betrifft eine Schaltvorrichtung für ein Geschwindigkeits-Wechselgetriebe, insbesondere für Kraftfahrzeuge, gemäß dem Oberbegriff des Patentanspruches 1.

Aus der DE 696 15 964 T2, von der im Oberbegriff des Anspruchs 1 ausgegangen wird, ist eine Schaltvorrichtung bekannt, bei der durch einen Spalt zwischen den Zahnkränzen ein in die Schiebemuffe eingreifender, axial verschiebbarer Schaltflansch einragt, der bei seiner Verschiebung die Schaltmuffe mitnimmt. Der Verschiebeweg des Schaltflansches ist somit so groß wie der der Schaltmuffe. Entsprechend ist die axiale Breite des Spaltes.

Aus der EP 0 819 864 A1 ist eine Schaltvorrichtung bekannt, bei der die zwischen den Zahnrädern angeordnete Schiebemuffe radial innerhalb und axial neben dem Zahnkranz des einen Zahnrades und neben dem mit gleichen Radius wie die Schiebemuffe ausgebildeten Zahnkranz eines zweiten Zahnrades angeordnet ist.

In der DE 19901067 A1 ist eine Schaltvorrichtung beschrieben, mit der zwischen einem Vorwärtsgang-Zahnrad und einem Rückwärtsgang-Zahnrad geschaltet werden soll. Zum Ansynchronisieren des Rückwärtsganges ist in einer Ausnehmung des Vorwärtsgang-Zahnrades ein Reibkonusring angeordnet, der mit einer zwischen den Zahnrädern radial innerhalb von deren Zahnkränzen angeordneten Schaltmuffe zusammenwirkt. Die Schaltmuffe trägt eine Innenverzahnung, die mit der Schaltverzahnung des Rückwärtsgang-Zahnrades in Eingriff bringbar ist. Die axiale Verschiebung der Schaltmuffe erfolgt mittels Schaltschwinge, die um eine radial innerhalb der äußeren Zahnkränze der beiden Zahnräder und senkrecht zur Getriebeachse angeordneten Gleitsteine aufweiset, die an sich diametral gegenüberliegenden Stellen einer Umfangsnut der Schiebemuffe geführt sind.
Der Erfindung liegt die Aufgabe zugrunde, eine gattungsgemäße Schaltvorrichtung derart weiterzubilden, dass sie insbesondere in axialer Erstreckung weniger Bauraum benötigt.

Diese Aufgabe wird erfindungsgemäß mit den kennzeichnenden Merkmalen des Patentanspruches 1 gelöst.

Insbesondere durch die erfindungsgemäße Konstruktion des Betätigungsteils, das um eine etwa tangential zu den Zahnkränzen zwischen diesen verlaufende Achse schwenkbar ist, wird ermöglicht, dass der axiale Spalt zwischen den Zahnkränzen schmal sein kann, so dass die Schaltvorrichtung zusammen mit den mit ihr schaltbaren Zahnkränzen axial kurz baut.

Die Unteransprüche sind auf vorteilhafte Ausführungsformen und Weiterbildungen der erfindungsgemäßen Schaltvorrichtung gerichtet.

Bei der erfindungsgemäßen Vorrichtung sind die beiden Zahnräder topfförmig mit einander zugewandten Ausnehmungen und radial äußeren Zahnkränzen versehen sind, dass in den Ausnehmungen die Schaltverzahnungen und die Synchronkupplung mit den beiden Synchronringen angeordnet sind und dass ferner die Schaltschwinge ebenfalls in den Ausnehmungen der Zahnräder und radial innerhalb der Zahnkränze angeordnet und über einen axial schmalen Abstand (a) zwischen den Zahnkränzen von einer Betätigungseinrichtung verstellbar ist. Der erfindungsgemäße Vorschlag zielt somit darauf ab, die Synchronkupplung der Schaltvorrichtung im wesentlichen in die Zahnräder zu integrieren und damit die Anordnung Zahnräder und Synchronkupplung baulich deutlich zu verkürzen. Die Ausnehmungen sind dabei so bemessen, dass die Schiebemuffe der Synchronkupplung aus der Mittelstellung (Kupplung offen) in die entgegengesetzt zu schaltenden Gangstellungen verschoben werden kann. Ferner ist die Schaltschwinge in den Ausnehmungen der Zahnräder und radial innerhalb der Zahnkränze angeordnet und über den axial schmalen Abstand zwischen den Zahnkränzen von der Betätigungseinrichtung verstellbar ausgebildet. Durch diese zusätzliche Integration der Schaltschwinge ist lediglich deren Betätigung von außen sicherzustellen, während die Synchronkupplung und die Schaltschwinge baulich und räumlich in die Zahnräder integriert sind.

In vorteilhafter Weiterbildung der Erfindung wird ferner vorgeschlagen, dass die Schaltschwinge um eine im Bereich der Zahnkränze der Zahnräder definierte Schwenkachse schwenkbar an einer drehbar in einem Getriebegehäuse gelagerten Betätigungseinrichtung gehalten ist. Durch die Schwenkbarkeit der Schaltschwinge können die Zahnräder besonders nahe aneinander gerückt werden, weil unabhängig vom erforderlichen Verschiebeweg der Schaltmuffe nur der für die Betätigungseinrichtung (z.B. eine Schwenkachse) benötigte Bauraum zu berücksichtigen ist.

Besonders vorteilhaft kann dabei die Schaltschwinge fest mit einem als Flacheisen ausgeführten Betätigungsteil der Betätigungseinrichtung verbunden sein, das mit seiner Schmalseite und etwa tangential verlaufend in die Zahnkränze der Zahnräder einragt und somit einen besonders schmalen Abstand bzw. Freiraum zwischen den Zahnkränzen der Zahnräder benötigt. Die Zahnkränze können dadurch ggf. auch breiter ausgeführt sein (größere Überdeckung der Laufverzahnungen bei Schrägverzahnung).

Zur erforderlichen Drehlagerung der Betätigungseinrichtung im Gehäuse des Wechselgetriebes können an dem Betätigungsteil beiderseits rotationssymmetrische Lagerbolzen befestigt bzw. angeschweißt sein.

Ferner können fertigungstechnisch besonders günstig die Schaltschwinge und das Betätigungsteil als Blechpressteile hergestellt und fest miteinander verbunden bzw. zu einer Baueinheit zusammengefügt sein.

Bei einer an sich bekannten Wälzlagerung der kuppelbaren Zahnräder können diese bevorzugt als axial und radial wirkende, zweireihige Wälzlager in O-Anordnung ausgeführt sein. Dies bewirkt zum einen eine besonders steife Lagerung der topfförmigen Zahnräder und eine damit verbundene hohe Laufruhe in den Laufverzahnungen und zum anderen werden Wirkungsgradverluste vermieden, die durch axiales Anlaufen benachbarter Getriebeelemente, z.B. weiterer Gangzahnräder, ggf. auftreten könnten.

Die Wälzlager können fertigungstechnisch und baulich besonders günstig Schrägschulter-Kugellager sein, deren radial äußere Lagerlaufflächen ggf. unmittelbar in den Nabenabschnitten der Zahnräder ausgeführt sind.

Besonders vorteilhaft können des weiteren die Zahnräder Laufverzahnungen mit geringerer Zahnhöhe bzw. kleineren Modulen als herkömmliche Verzahnungen bei vergleichbarer Übertragungsleistung aufweisen. Neben einem verbesserten Wirkungsgrad in der Antriebsübertragung schafft diese Maßnahme einen größeren radialen Freiraum in den topfförmigen Ausnehmungen innerhalb der kuppelbaren Zahnräder für die Synchronkupplung und ggf. die Schaltgabel.

Die Synchronkupplung kann in bekannter Weise eine Außen- oder Innensynchronisierung aufweisen; vorzugsweise wird jedoch eine Doppelkonuskupplung mit jeweils einem Innen- und einem Außenkonus vorgeschlagen, die auch unter baulich besonders beengten Verhältnissen eine zuverlässige und robuste Synchronisierung beim Schalten der Gänge sicherstellt.

Schließlich ist eine besonders bevorzugte Verwendung mehrerer der besagten Schaltvorrichtungen in einem Geschwindigkeits-Wechselgetriebe für Kraftfahrzeuge darin zu sehen, dass bei sechs Übersetzungsstufen bzw. sechs kuppelbaren Zahnrädern, die mit Festzahnrädern korrespondieren und auf einer oder zwei Getriebewellen angeordnet sind, sämtliche besagten Zahnräder zwischen jeweils zwei Wälzlagern für die gehäuseseitige Lagerung der Getriebewellen angeordnet sind. Das heißt, dass unter Verwendung mehrerer, axial besonders kurz bauender Schaltvorrichtungen ein Sechsgang-Wechselgetriebe im wesentlichen in einem herkömmlichen Getriebegehäuse für ein Viergang-Wechselgetriebe verbaubar ist, mit insbesondere einer nur zweifachen Lagerung der betreffenden Getriebewellen. Eine Zwischenlagerung mit ggf. einem zusätzlichen Getriebedeckel kann vorteilhaft entfallen.

Ein Ausführungsbeispiel der Erfindung ist im folgenden mit weiteren Einzelheiten näher erläutert. Die schematische Zeichnung zeigt in:
- **Fig. 1**: einen Längsschnitt gemäß Linie I - I der Fig. 2 durch eine Schaltvorrichtung in einem Geschwindigkeits-Wechselgetriebe für Kraftfahrzeuge, mit zwei kuppelbaren Zahnrädern und einer integrierten Synchronkupplung;
- **Fig. 2**: einen Querschnitt entlang der Linie II - II der Fig. 1 durch die Schaltvorrichtung; und
- **Fig. 3**: eine raumbildliche Darstellung der Schaltvorrichtung nach den Fig. 1 und 2, mit teilweise aufgebrochenen Zahnrädern.

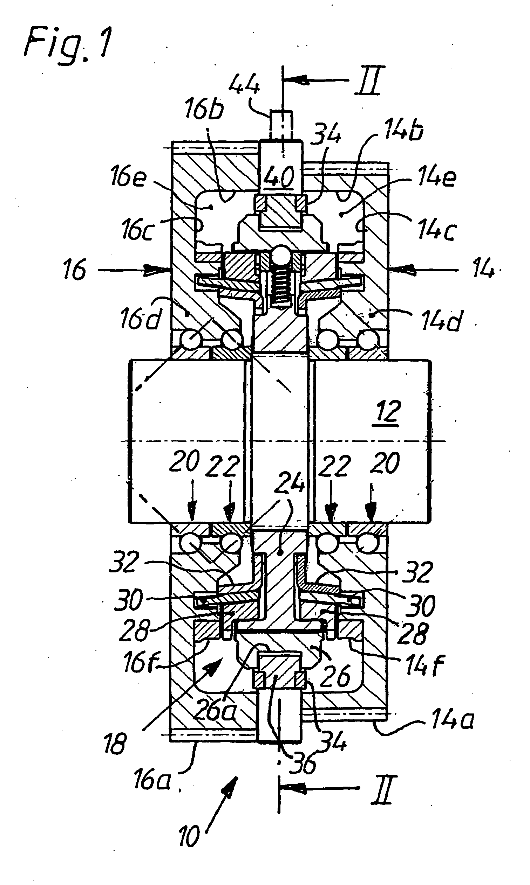

Die Schaltvorrichtung 10 gemäß den Fig. 1 bis 3 ist Teil eines Geschwindigkeits-Wechselgetriebes bzw. Schaltgetriebes für Kraftfahrzeuge, wobei abschnittsweise eine Antriebswelle 12 ersichtlich ist, die mittels zweier Wälzlager (nicht dargestellt) in dem Getriebegehäuse des Wechselgetriebes drehbar gelagert ist. Parallel zur Antriebswelle ist eine Abtriebswelle ebenfalls über zwei Wälzlager drehbar gelagert. Das Wechselgetriebes bzw. Schaltgetriebe ist soweit nicht dargestellt und beschrieben bekannter Bauart.

Auf der Antriebswelle 12 und ggf. der Abtriebswelle sind zur Bildung von sechs Vorwärtsgängen drei Schaltvorrichtungen 10 wie nachstehend beschrieben vorgesehen.

Die Schaltvorrichtung 10 setzt sich im wesentlichen zusammen aus zwei drehbar auf der Antriebswelle 12 gelagerten, kuppelbaren Zahnrädern 14, 16 und einer in die Zahnräder 14, 16 integrierten Synchronkupplung 18. Die Zahnräder 14, 16 kämmen mit ihren Laufverzahnungen 14a, 16a mit nicht dargestellten Festzahnrädern auf der Abtriebswelle des Wechselgetriebes; die Anordnung kann aber auch umgekehrt sein.

Die Zahnräder 14, 16 sind jeweils topfförmig ausgeführt, mit einem äußeren, die Laufverzahnungen 14a, 16a tragenden Zahnkranz 14b, 16b, einem radial verlaufenden Flanschabschnitt 14c, 16c und einem radial inneren Nabenabschnitt 14d, 16d.

Die Zahnräder 14, 16 sind auf der Antriebswelle 12 über radial und axial tragende, zweireihige Wälzlager bzw. Schrägschulter-Kugellager 20, 22 drehbar gelagert, wobei die radial äußeren Laufbahnen der Kugellager 20, 22 wie ersichtlich unmittelbar in die Nabenabschnitte 14d, 16d eingeschliffen sind. Die Ausrichtung der Wälzlager bzw. Kugellager 20, 22 ist dabei wie ebenfalls ersichtlich (vgl. gestrichelte Linien in **Fig. 1**) in O-Anordnung, wodurch sich eine relativ breite Lager-Abstützbasis für die Zahnräder 14, 16 und eine entsprechend steife Lagerung auf der Antriebswelle 12 ergibt.

Zwischen den beiden Zahnrädern 14, 16 bzw. in den durch deren topfförmige Gestaltung gebildeten, einander zugewandten Ausnehmungen 14e, 16e ist die Synchronkupplung 18 angeordnet, die sich im wesentlichen aus einem radial inneren Kupplungskörper 24, einer äußeren Schiebemuffe 26 und zwei dem Kupplungskörper 24 axial benachbarten Synchronringen 28 zusammensetzt.

Der Kupplungskörper 24 ist drehfest über eine Keilverzahnung auf der Antriebswelle 12 gehalten; ferner ist die Schiebemuffe 26 auf dem Kupplungskörper 24 über eine Verzahnung unverdrehbar, aber axial verschiebbar geführt. Die Schiebemuffe 26 kann aus der in **Fig.1** gezeichneten Mittelstellung (Kupplung offen) nach links oder rechts in eine Gangstellung verschoben werden, wobei die Innenverzahnung der Schiebemuffe 28 zunächst über eine Sperrverzahnung des jeweiligen Synchronringes 28 und dann auf eine radial innerhalb der Zahnkränze 14b, 16b liegende Schaltverzahnung 14f, 16f formschlüssig aufgeschoben wird und damit das entsprechende Zahnrad 14 oder 16 mit der Antriebswelle 12 kuppelt.

Die Synchronkupplung 18 ist als eine an sich bekannte Doppelkonuskupplung ausgeführt, wobei die die Synchronisierung bewirkenden Konusflächen außer an den Synchronringen 28 auch jeweils an einem formschlüssig an den Zahnrädern 14, 16 gehaltenen Zwischenring 30 und an dem Kupplungskörper 24 festgelegten Innenringen 32 ausgeführt sind. Es sei bemerkt, dass die Bauart und Funktion der Synchronkupplung 18 - soweit nicht beschrieben - bekannter und dem Fachmann geläufiger Ausführung sein kann. Es kann auch eine einfache Innen- oder Außensynchronisierung (z.B. nach Borg Warner ®) eingesetzt sein.

Die Betätigung der Schiebemuffe 26 der Synchronkupplung 18 erfolgt mittels einer Schaltschwinge 34, die die Schiebemuffe 26 um ca. 180 Grad umfasst und mit verdrehbar an den Enden der Schaltschwinge 34 angeordneten, diametral angreifenden Gleitschuhen 36 in eine Ringnut 26a der Schiebemuffe 26 eingreift.

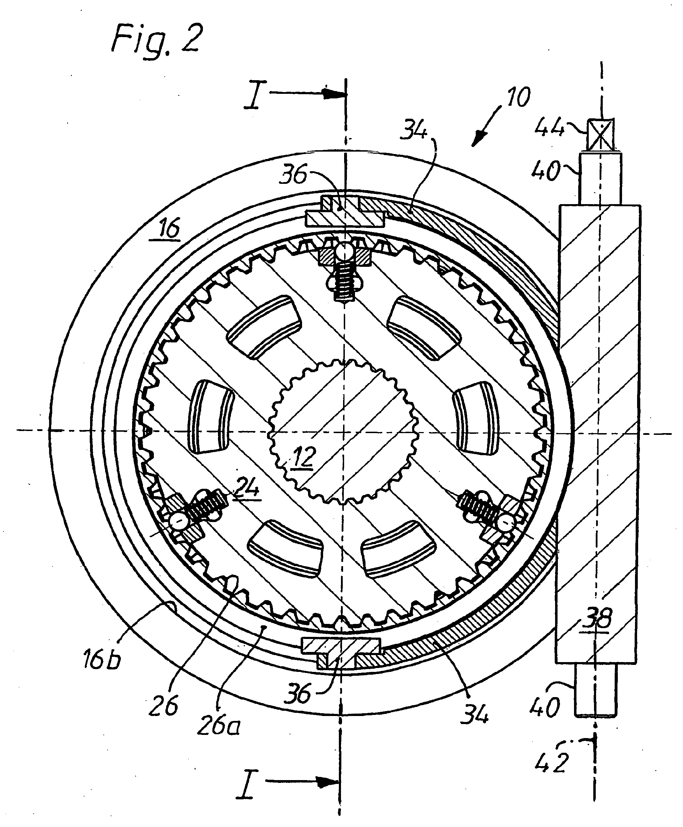

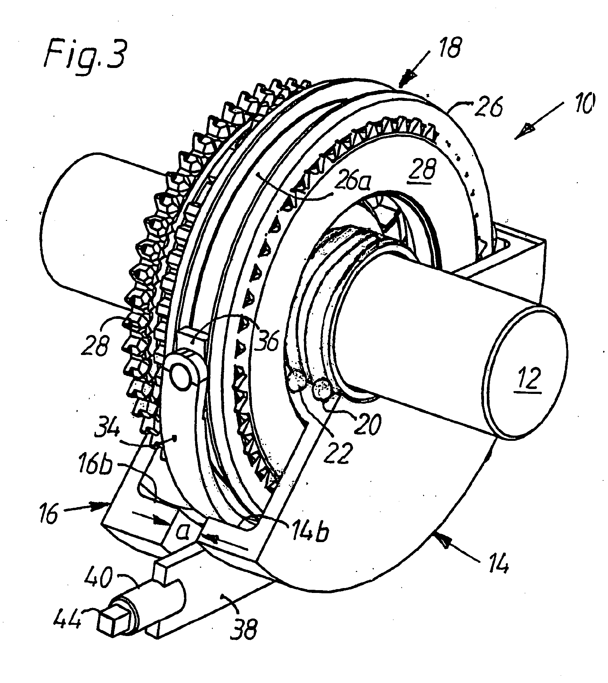

Die Schaltschwinge 34 bildet eine Baueinheit mit einem in Form eines Flacheisens mit rechteckigem Querschnitt (vgl. Fig. 3) hergestelltem Betätigungsteil 38 und an dessen Enden befestigten, rotationssymmetrischen Lagerbolzen 40, über die die Schaltschwinge 34 um die in Fig.2 eingezeichnete Schwenkachse 42 mittels einer nicht dargestellten Betätigungseinrichtung zum Schalten der Übersetzungsstufen bzw. Gänge verschwenkbar ist.

Das Betätigungsteil 38 ragt dabei etwa tangential und mit seiner Schmalseite in einen schmalen Ringspalt bzw. Abstand a zwischen die einander zugewandten Stirnseiten der Zahnkränze 14b, 16b der Zahnräder 14, 16 ein; der Abstand a berücksichtigt die Breite des Betätigungsteiles 38 zuzüglich des geringen Winkelausschlages bei dessen begrenzter Verdrehung. Die Lagerbolzen 40 sind in nicht dargestellter Weise in dem umgebenden Getriebegehäuse des Wechselgetriebes drehbar gelagert.

Die Verdrehung des Betätigungsteiles 38 wird mittels einer nicht dargestellten Betätigungseinrichtung, z.B. mittels eines an dem einen Lagerbolzen 40 an einem angeformten Vierkant 44 angreifendem Hebel oder dergleichen bewirkt; der Hebel kann manuell über ein entsprechendes Gestänge oder über Aktuatoren automatisch stellbar sein.

Die schwenkbare Schaltschwinge 34 mit dem Betätigungsteil 38 ist aus Blechpressteilen zu einer wenig Bauraum erfordernden Baueinheit ausgeführt und wie ersichtlich radial innerhalb der Zahnkränze 14b, 16b in den gebildeten Ausnehmungen 14e, 16e angeordnet bzw. in die Zahnräder 14, 16 integriert.

Dies verringert den axialen Bauraum der Schaltvorrichtung 10 beträchtlich, wobei die Zahnkränze 14b, 16b wie ersichtlich die Schaltverzahnungen 14f, 16f, die Synchronringe 28 und teilweise die Schiebemuffe 26 und die Schaltgabel 34 axial überragen.

Die Laufverzahnungen 14a,16a der Zahnräder 14, 16 sind mit geringerer Zahnhöhe bzw. kleineren Modulen als herkömmliche Verzahnungen bei vergleichbarer Übertragungsleistung ausgelegt. Dies schafft - wie aus **Fig. 1** ersichtlich -mehr radialen Bauraum für die Integration der Synchronkupplung 18 und der Schaltschwinge 34 bei geringeren Abwälzverlusten in den Laufverzahnungen 14a, 16a. Durch die Verwendung der auch axial tragenden Wälzlager 20, 22 werden zudem Anlaufverluste zwischen weiteren, dem Zahnrädern 14, 16 axial benachbarten Getriebeelementen, wie z.B. weiteren Zahnrädern, vermieden.

Der insbesondere axial geringe Bauraum der Schaltvorrichtung 10 ermöglicht die Anordnung dreier Schaltvorrichtungen 10 zur Erzielung eines Schaltgetriebes mit sechs Gängen auf eine Baulänge, die es ermöglicht, die Getriebewellen bzw. die Antriebswelle 12 und die Abtriebswelle (nicht dargestellt) mit jeweils nur zwei Wälzlagern in dem entsprechenden Getriebegehäuse zu lagern.

Es versteht sich, dass nicht alle drei Schaltvorrichtungen 10 auf der Antriebswelle 12 angeordnet sein müssen, sondern wie an sich bekannt auf beide Getriebewellen verteilt angeordnet sein können.
Die beispielhaft beschriebene Schaltvorrichtung kann in vielfältiger Weise abgeändert werden. Beispielsweise muss das Betätigungsteil 38, dessen Drehachse 42 etwa tangential zu den Zahnkränzen 14b, 16b und senkrecht zur Antriebswelle 12 durch den Spalt zwischen den Zahnkränzen hindurchläuft, nicht einteilig mit der Schaltgabel 34 ausgebildet sein, sondern kann beispielsweise mit einem Zapfen in eine entsprechende Ausnehmung der Schaltgabel eingreifen, wenn diese beispielsweise unverdrehbar an den Gleitschuhen gehalten und dadurch nur parallel zur Antriebswelle 12 beweglich ist. Wichtig ist, dass das Betätigungsteil in dem Spaltraum im Wesentlichen nur schwenkbar ist, so dass die axiale Breite des Spaltraums wegen der Hebelwirkung erheblich kleiner sein kann als der Verschiebeweg der Schiebemuffe und nur etwas größer sein muss als die Dicke des Betätigungsteils im Bereich des Spaltes. Die Schwenkachse des Betätigungsgliedes verläuft vorteilhafterweise parallel zu der Verbindungslinie zwischen den sich diametral gegenüberliegenden, beispielsweise in einer Umfangsnut der Schiebemuffe geführten Gleitschuhen.

## Patentansprüche

1. Schaltvorrichtung für ein Geschwindigkeits-Wechselgetriebe, insbesondere für Kraftfahrzeuge, mit zumindest zwei auf einer Getriebewelle (12) drehbar gelagerten Zahnrädern (14, 16) mit radial äußeren Zahnkränzen (14b, 16b), die mit Festzahnrädern auf einer weiteren Getriebewelle korrespondieren, und einer zwischen den Zahnrädern auf der Getriebewelle angeordneten Synchronkupplung (18), mittels der das eine oder das andere Zahnrad mit der Getriebewelle kuppelbar ist, wobei eine Schiebemuffe (26) der Synchronkupplung über jeweils einen Synchronring (28) mit einer Sperrverzahnung auf jeweils eine Schaltverzahnung (14f, 16f) der Zahnräder schiebbar ist und die beiden Zahnräder (14, 16) topfförmig mit einander zugewandten Ausnehmungen (14e, 16e) ausgebildet sind, in denen die Schaltverzahnungen (14f, 16f) und die Synchronkupplung (18) mit den beiden Synchronringen (28) angeordnet sind,
**dadurch gekennzeichnet, dass**
in den Ausnehmungen (14e, 16e) weiter eine Schaltschwinge (34) aufgenommen ist, die an diametral gegenüberliegenden Stellen der Schiebemuffe (26) angreift und mittels eines durch einen zwischen den Zahnkränzen (14b, 16b) ausgebildeten Spalt hindurch ragendes Betätigungsteils (38) verstellbar ist, das um eine etwa tangential zu den Zahnkränzen (14b, 16b) verlaufende und etwa senkrecht zur Getriebewelle (12) gerichtete Schwenkachse (42) schwenkbar ist.

2. Schaltvorrichtung nach Anspruch 1, **dadurch gekennzeichnet, dass** die Schaltschwinge (34) starr mit dem Betätigungsteil (38) verbunden ist und mit an sich diametral gegenüberliegenden Stellen der Schiebemuffe (26) längs deren Außenumfang geführten Gleitschuhen (36) um jeweils etwa senkrecht auf dem Außenumfang der Schiebemuffe stehende Achsen schwenkbar verbunden ist.

3. Schaltvorrichtung nach Anspruch 1 oder 2, **dadurch gekennzeichnet, dass** das Betätigungsteil (38) als Flacheisen ausgebildet ist, das mit seiner Schmalseite in den zwischen den Zahnrädern bestehenden Spalt einragt.

4. Schaltvorrichtung nach Anspruch 3, **dadurch gekennzeichnet, dass** an dem Betätigungsteil (38) beiderseits rotationssymmetrische Lagerbolzen (40) zur Drehlagerung in dem Getriebegehäuse befestigt sind.

5. Schaltvorrichtung nach einem oder mehreren der vorhergehenden Ansprüche, **dadurch gekennzeichnet, dass** die Schaltschwinge (34) und das Betätigungsteil (38) als Blechpressteile hergestellt und fest miteinander verbunden sind.

6. Schaltvorrichtung nach einem oder mehreren der vorhergehenden Ansprüche, **dadurch gekennzeichnet, dass** die Zahnräder (14, 16) auf der Getriebewelle (12) über axial und radial wirkende, zweireihige Wälzlager (20, 22) in O-Anordnung gelagert sind.

7. Schaltvorrichtung nach Anspruch 6, **dadurch gekennzeichnet, dass** die Wälzlager entsprechend angeordnete Schrägschulter-Kugellager (20, 22) sind.

8. Schaltvorrichtung nach Anspruch 6 oder 7, **dadurch gekennzeichnet, dass** die radial äußeren Lagerlaufflächen der Wälzlager (20, 22) unmittelbar in den Nabenabschnitten (14d, 16d) der Zahnräder (14, 16) ausgeführt sind.

9. Schaltvorrichtung nach einem oder mehreren der vorhergehenden Ansprüche, **dadurch gekennzeichnet, dass** die Zahnräder (14, 16) Laufverzahnungen (14a, 16a) mit geringerer Zahnhöhe bzw. kleineren Modulen als herkömmliche Verzahnungen bei vergleichbarer Übertragungsleistung aufweisen.

10. Schaltvorrichtung nach einem oder mehreren der vorhergehenden Ansprüche, **dadurch gekennzeichnet, dass** die Synchronkupplung (18) als eine Doppelkonuskupplung mit jeweils einem Innen- und einem Außenkonus ausgeführt ist.

11. Verwendung mehrerer Schaltvorrichtungen (10) nach einem oder mehreren der vorhergehenden Ansprüche in einem Geschwindigkeits-Wechselgetriebe für Kraftfahrzeuge mit sechs Übersetzungsstufen bzw. sechs kuppelbaren Zahnrädern (14, 16), die mit Festzahnrädern korrespondieren und auf einer oder zwei Getriebewellen (12) angeordnet sind, wobei sämtliche besagten Zahnräder (14, 16) zwischen jeweils zwei Wälzlagern für die gehäuseseitige Lagerung der Getriebewellen angeordnet sind.

## Claims

1. Gear-changing device for a speed-changing transmission, in particular for motor vehicles, having at least two gearwheels (14, 16) rotatably supported on a transmission shaft (12), which gearwheels have radially-outer gear rims (14b, 16b) and correspond to the gearwheels fixed on a further transmission shaft, and a synchronizer clutch (18) disposed on the transmission shaft between the gearwheels, the one or the other gearwheel being couplable with the transmission shaft by means of the synchronizer clutch, wherein a sliding sleeve (26) of the synchronizer clutch is displaceable over a respective synchronizer ring (28) having locking gear teeth onto respective gear-selecting gear teeth (14f, 16f) of the gearwheels, and the two gearwheels (14, 16) are pot-shaped with recesses (14e, 16e) facing towards each other, the gear-selecting gear teeth (14f, 16f) and the synchronizer clutch (18) having the two synchronizer rings (28) being disposed in the recesses (14e, 16e),
**characterised in that**
a gear-changing rocker (34) is also accommodated in the recesses (14e, 16e), the gear-changing rocker (34) engaging at diametrically-opposing locations of the sliding sleeve (26) and being movable by an actuation part (38) projecting through a gap formed between the gear rims (14b, 16b), the actuation part (38) being pivotable about a pivot axis (42) oriented approximately perpendicular to the transmission shaft and extending approximately tangential to the gear rims (14b, 16b).

2. Gear-changing device according to claim 1, **characterised in that** the gear-changing rocker (34) is rigidly linked with the actuation part (38) and is connected with sliding shoes (36) that are guided along the outer circumference of the sliding sleeve (26) at diametrically-opposing locations thereof, the slide shoes being pivotable with respect to the gear-changing rocker about respective axes extending approximately perpendicular to the outer circumference of the sliding sleeve (26).

3. Gear-changing device according to claim 1 or 2, **characterised in that** the actuation part (38) is formed as a flat-rolled steel bar, the narrow side of actuation part (38) projecting into the gap existing between the gearwheels.

4. Gear-changing device according to claim 3, **characterised in that** rotationally-symmetric bearing pins (40) are attached on both sides of the actuation part (38) for rotationally supporting the actuation part in the transmission housing.

5. Gear-changing device according to one or a plurality of the preceding claims, **characterised in that** the gear-changing rocker (34) and the actuation part (38) are produced as sheet metal parts and are securely linked with each other.

6. Gear-changing device according to one or a plurality of the preceding claims, **characterised in that** the gearwheels (14, 16) are supported on the transmission shaft (12) by means of axially-acting and radially-acting, two-row roller bearings (20, 22) arranged in an O-arrangement.

7. Gear-changing device according to claim 6, **characterised in that** the roller bearings are suitably-disposed, diagonal-shouldered contact ball bearings (20, 22).

8. Gear-changing device according to claim 6 or 7, **characterised in that** outer bearing surfaces of the roller bearings (20, 22) are formed directly in the hub sections (14d, 16d) of the gearwheels (14, 16).

9. Gear-changing device according one or a plurality of the preceding claims, **characterised in that** the gearwheels (14, 16) include running gear teeth (14a, 16a) with a lower tooth height and/or smaller modules than conventional gear teeth for a comparable transmission output power.

10. Gear-changing device according to one or a plurality of the preceding claims, **characterised in that** the synchronizer clutch (18) is formed as a double cone clutch having each of an inner cone and an outer cone.

11. Use of a plurality of gear-changing devices (10) according to one or a plurality of the preceding claims in a speed-changing transmission for motor vehicles having six transmission ratio steps and/or six couplable gearwheels (14, 16), which correspond with gearwheels fixedly disposed on one or two transmission shaft(s) (12), wherein all aforementioned gearwheels (14, 16) are each disposed between two roller bearings for the housing-side bearing of the transmission shaft.

## Revendications

1. Dispositif de changement de vitesses pour boîte de vitesses, en particulier pour véhicules automobiles, comprenant au moins deux roues dentées (14, 16) montées à rotation sur un arbre de transmission (12) et pourvues de couronnes dentées radialement externes (14b,16b), qui correspondent à des roues dentées fixes montées sur un autre arbre de transmission, et un embrayage synchrone (18) agencé entre les roues dentées sur l'arbre de transmission et au moyen duquel l'une ou l'autre des roues dentées peut être couplée à l'arbre de transmission, dans lequel un manchon coulissant (26) de l'embrayage synchrone peut coulisser, via respectivement une bague synchrone (28) pourvue d'une denture de blocage, sur respectivement une denture de changement de vitesse (14f, 16f) des roues dentées et les deux roues dentées (14, 16) se présentent sous la forme d'un pot avec des évidements (14e, 16e) tournés l'un vers l'autre, dans lesquels sont disposés les dentures de changement de vitesse (14f, 16f) et l'embrayage synchrone (18) avec les deux bagues synchrones (28),
**caractérisé en ce que,**
dans les évidements (14e, 16e), est logé en outre un balancier de changement de vitesse (34), qui vient en prise en des points diamétralement opposés du manchon coulissant (26) et est réglable à l'aide d'une pièce de commande (38) dépassant à travers une fente formée entre les couronnes dentées (14b, 16b), laquelle pièce de commande peut pivoter autour d'un axe pivot (42) s'étendant plus ou moins tangentiellement aux couronnes dentées (14b, 16b) et orienté à peu près perpendiculairement à l'arbre de transmission (12).

2. Dispositif de changement de vitesses selon la revendication 1, **caractérisé en ce que** le balancier de changement de vitesse (34) est lié de manière rigide à la pièce de commande (38) et est lié à des patins coulissants (36) guidés en des points diamétralement opposés du manchon coulissant (26) sur sa périphérie externe de manière à pouvoir pivoter autour, respectivement, d'axes disposés plus ou moins perpendiculairement sur la périphérie externe du manchon coulissant.

3. Dispositif de changement de vitesses selon la revendication 1 ou 2, **caractérisé en ce que** la pièce de commande (38) se présente sous la forme d'un fer plat qui entre par son côté étroit dans la fente ménagée entre les roues dentées.

4. Dispositif de changement de vitesses selon la revendication 3, **caractérisé en ce que** des axes de palier à symétrie de rotation (40) sont fixés des deux côtés sur la pièce de commande (38) pour le montage à rotation dans la boîte de vitesses.

5. Dispositif de changement de vitesses selon une ou plusieurs des revendications précédentes, **caractérisé en ce que** le balancier de changement de vitesse (34) et la pièce de commande (38) se présentent sous forme de pièces façonnées en tôle et sont assemblées de manière fixe l'un à l'autre.

6. Dispositif de changement de vitesses selon une ou plusieurs des revendications précédentes, **caractérisé en ce que** les roues dentées (14, 16) sont montées sur l'arbre de transmission (12) via des paliers à roulement (20, 22) à deux rangées, agissant axialement et radialement dans un aménagement torique.

7. Dispositif de changement de vitesses selon la revendication 6, **caractérisé en ce que** les paliers à roulement sont des roulements à billes à bord oblique (20, 22) agencés de manière correspondante.

8. Dispositif de changement de vitesses selon la revendication 6 ou 7, **caractérisé en ce que** les bandes de roulement radialement externes des paliers à roulement (20, 22) sont aménagées directement dans les segments de moyeu (14d, 16d) des roues dentées (14, 16).

9. Dispositif de changement de vitesses selon une ou plusieurs des revendications précédentes, **caractérisé en ce que** les roues dentées (14, 16) présentent des dentures d'engrènement (14a, 16a) avec une hauteur de dents moindre ou des modules plus petits que les dentures conventionnelles pour une puissance de transmission comparable.

10. Dispositif de changement de vitesses selon une ou plusieurs des revendications précédentes, **caractérisé en ce que** l'embrayage synchrone (18) se présente sous la forme d'un embrayage à double cône avec, respectivement, un cône interne et un cône externe.

11. Utilisation de plusieurs dispositifs de changement de vitesses (10) selon une ou plusieurs des revendications précédentes dans une boîte de vitesses pour véhicules automobiles ayant six rapports de démultiplication ou six roues dentées (14, 16) susceptibles de s'accoupler, qui correspondent à des roues dentées fixes et sont agencées sur un ou deux arbres de transmission (12), lesdites roues dentées (14, 16) étant toutes agencées entre, respectivement, deux paliers à roulement pour le logement des arbres de transmission côté boîtier.
